# EUROPEAN PATENT SPECIFICATION

(11) **EP 2 294 018 B1**
(45) Date of publication and mention of the grant of the patent: **04.09.2013**
(21) Application number: 09734030.1
(22) Date of filing: 17.04.2009
(51) Int. Cl.: C02F 3/12, C02F 3/20, C02F 3/30

(54) **PROCESS AND PLANT TO PURIFY POLLUTED WATERS**
VERFAHREN UND VORRICHTUNG ZUR REINIGUNG VON VERSCHMUTZTEM WASSER
PROCÉDÉ ET INSTALLATION POUR PURIFIER DES EAUX POLLUÉES

(30) Priority: 23.04.2008 IT MI20080742
(43) Date of publication of application: 16.03.2011
(73) Proprietor: Ciem Impianti S.r.l., 21100 Varese (IT)
(72) Inventor: BAIO, Emanuele, I -21046 Malnate (IT); PAGANI, Dario, l -21100 Varese (IT)
(74) Representative: Ferraiolo, Ruggero
(86) International application number: PCT/EP2009/002814
(87) International publication number: WO 2009/129963

(56) References cited:
- WO-A1-97/49640
- US-A- 3 232 866
- US-A- 3 997 437
- US-A- 4 152 259
- US-A- 5 087 292

## Description

The present invention relates to a process and a plant for purifying polluted waters, in particular for carrying out a biological purification for reducing the nitrogen content and the bad smell in highly polluted waters, more specifically of livestock sewage, digestates from biogas and highly polluted effluents refractory to biological purification and designed for agronomic spreading or to achieve a complete purification of said sewages or effluents.

In the whole of the following text, "sewage" means all polluted waters of zootechnical origin, among which for instance: sewage, poultry manure, digestates from biogas, etc.; "effluents" means all polluted waters that are not of zootechnical origin and contain a high or very high load of nitrogen and pollutants also very refractory to purification.

### State of the art

The state of the art includes processes and plants of various types, as summarized below.
a. Anaerobic treatments, in which the sewage is treated in one-stage or multi-stage digesters in which the organic substance is turned into biogas by means of biological methods. The whole of organic nitrogen is turned into ammonia nitrogen.
b. Concentration by filtration, in which the soluble fraction of the sewage or effluent is completely separated from the solid, suspended colloidal fraction using membrane-type forced filtration systems. The output of the plant is a fraction of sewage or effluent (about 80-90% by volume) separated from its polluting charge.
c. Concentration by evaporation, in which the sewage or effluent is heated up to water evaporation. Thus the polluting charge is concentrated in a lower volume.
d. Stripping, in which the sewage or effluent is heated to about 40-50°C and pH is raised to > 9 with sodium carbonate or another base. In a hermetically sealed container air is bubbled from the bottom, which air extracts by stripping formed NH₃ at predefined temperature and acidity conditions. The extracted gas is neutralized with acids, thus obtaining ammonium salts. After the treatment, the sewage or effluent is cooled and neutralized with acid. Remaining air must be treated before being sent into the atmosphere.
e. Traditional biological purification, in which the sewage or effluent is treated by activating a bacterial biomass by a series of anaerobic (in some cases), aerobic (nitro) and anoxic (de-nitro) processes. The biomass thus activated oxidizes in the aerobic step the organic substance and ammonia nitrogen present in the sewage or effluent and turns them into CO₂, NO₃ and new organic substance. In the following anoxic step, NO₃ is reduced to N₂, which is sent into the atmosphere, consuming new organic substance. The sewage or effluent is oxygenated by systems using membranes, flow-jet, surface turbines sending sewage or effluent into the air and oxygenating it.
f. European Patent No. 0 907 615 to Odobez discloses a container in which the sewage or effluent is reduced by biological processes in one SBR tank (Sequency Batch Reactor) with the alternation of nitrification (nitro) steps in which the sewage or effluent is oxygenated at high pressure with suitable oxygenizers whose means causing a so-called "Venturi effect" recall atmospheric air, and de-nitrification (de-nitro) steps in which the sewage or effluent is stirred from the system itself at low pressure, the oxygenizers being installed near the bottom of the tank. Eventually, the sewage or effluent is discharged in a batch mode.
g. Document US 3 997 437 A discloses a container in which the excess sludge produced from a waste water treatment plant is treated by means of aerobic bacteria instead of anaerobic bacteria utilized in the common practice. Through some aerators, placed outside the container, which are fed by a recirculation pump, the sludge is aerated and continuously recirculated in the container itself so that an aerobic digestion of the sludge, more efficient compared to the anaerobic one, is activated. As additional sludge is periodically added, supernatant water is removed through an overflow line of a stilling well in the center of the container. After a lengthy period of time, part of the sludge in the bottom of the container will be withdrawn and moved to the drying beds. The system can also be used at the headworks of a waste water treatment plant as pre-treatment in order to create a more favorable environment for the accelerated growth of aerobic bacteria.
h. The Applicant and other institutions working in the present technical field are performing researches and tests for implementing microbiological processes and plants in which energy consumptions are reduced with respect to the state of the art.

### Drawbacks of the prior art

The solutions listed above (except for "e-f") do not effectively reduce nitrogen, but only move or transform it.

Anaerobic digestion plants produce biogas by decomposing the organic fraction only, but without removing the nutrients (N and P). Nitrogen is almost completely turned into ammonia nitrogen, with higher risks of NH₃ emissions into the atmosphere.

Filtration systems, more or less selective or forced, achieve a simple separation of organic substance and nutrients.

Evaporation systems basically reduce only the volume of polluted sewage with high energy consumption.

Stripping requires the use of dangerous chemicals, also with a high energy consumption for heating the sewage or effluent.

Biological purification plants are very sensitive to the variation of toxic substances, among which NH₃. This type of plants, therefore, must be equipped with a suitable oxygenation system for supporting the biological process to reduce the input of high polluting loads.

"Odobez technology", though having high reduction rates, leads to high energy consumptions since it is an industrial technology adapted to the zootechnical field. SBR sequence is not optimal since discontinuous feed and discharge cause even strong variations of the chemical-physical-biological status of the process inside the processing tank and threaten the effectiveness thereof Moreover, since in the anoxic step the container works at low pressure, the mixing of sewage or effluent in the tank is limited during this step. The control of the bacterial biomass is achieved only by the flotation due to bottom oxygenation, so that it is not possible to manage with accuracy biomass concentration in the tank and therefore fully manage the treatment and the hydraulic retention time (HRT). More to the point, it is difficult to control the biological foams building up due to the strong aeration during the high pressure step.

### Disclosure of the invention

It should be pointed out that in the present description and in the claims, "high pressure" as referred to air mixed with sewage or effluent being blown during the first process step means an optimal working pressure above 2 bars and in particular of about 4 bars in processes treating sewage of zootechnical origin, and pressures of at least 7 bars in processes treating effluents with a high load of substances refractory to biological purification.

It should also be pointed out that in the present description and in the claims, "conventional oxygenizers" or simply "oxygenizers" means oxygenizers according to Italian Patent No. 1 147 264, or known equivalent oxygenizers, i.e. oxygenizers equipped with means for sucking up atmospheric air which mixes with the fluid injected upstream due to the here conventionally so-called "Venturi effect" and for blowing such air together with the sewage or effluent under a pressure supplied by a pump.

The process can take place in one processing tank with continuous feed and discharge, in which two steps alternate, a first nitrification step and a second de-nitrification step. Being a continuous process, the sewage or effluent present in the processing tank must have already been treated and be ready for being discharged; sewage or effluent supplied from outside is the component required for bacterial metabolism and is therefore immediately consumed. In the first nitrification step, in which the pressure in an upper pipe network, also referred to as oxygenation network, is kept above 2 bars, a mixture of air and sewage or effluent is blown into the tank by means of conventional oxygenizers which, as is known, are provided with means sucking up air by "Venturi effect", the bacterial biomass present oxidizes the organic substance and ammonia nitrogen; the first one is turned into carbon dioxide and the second one into nitric and nitrous nitrogen, whereas a portion both of organic substance and of nitrogen is used for forming new bacterial biomass. Alternating times and step duration are selected depending on the nitrogen load being input. As a new feature, in the first step of the process, sewage or effluent mixed with air is blown at a pressure of at least 2 bars in the upper pipe network and at a distance D from the bottom of the tank varying from about half the tank height of the liquid in the tank up to the surface of the sewage in the tank, while in the second step of the process sewage or effluent treated in the first step are stirred with a stirring system without blowing air and keep the biomass suspended and break the foams that might have been formed in the first step.

Since in the plant according to the invention and in the first high pressure step the concentration of dissolved oxygen (DO) within the oxygenizers is high so as to create a positive redox potential (RedOX) condition, when the process treats sewage it is possible to keep in the volume of liquid in the tank conditions of dissolved oxygen (DO) and redox potential (RedOX) in which DO < 0.1 mg/l and RedOX = -200mV ÷ 0 mV, whereas DO = 0 mg/l and RedOX = -400 ÷ 300 mV in the second step, which causes a reduction of about 85% of nitrogen and of about 80% of organic substance. Sewage getting out of this process can undergo further treatments up to complete purification or can be sent directly to spreading or ferti-irrigation on fields.

In all other cases of treatment or complete purification of highly polluted effluents, OD, RedOX and biomass control conditions vary from application to application.

In all cases of treatment or purification of sewage or effluents the process develops high temperatures above 25°C, both in summer and in winter, which are kept thanks to the oxidative force and to process effectiveness.

The plant in which the process is implemented comprises the processing tank receiving from outside the polluted effluent or sewage, at least one pump sucking up effluent or sewage from the bottom of the tank and sending it to an upper pipe network up to a plurality of oxygenizers supplied by the filtered effluent or sewage and by atmospheric air, a filter being placed between the pump and a pipe sucking up the effluent or sewage from the bottom of the tank, and is characterized in that the pump produces in the pipe network a pressure of at least 2 bars and the discharge openings of the oxygenizers are placed at a distance D from the bottom of the tank varying from about half the effective height of the tank to the surface of the sewage in the tank

Preferably, the submerged oxygenizers are installed in the processing tank with the discharge axis in a position of 8° to 90° with respect to the horizontal, which increases with the depth of the tank.

As an alternative, the processing tank is associated to a closed aeration container in which the sewage or effluent is aerated in the first process step. This alternative is characterized in that the nitro/de-nitro process always takes place in the same processing tank, and in that in the first nitrification step the closed aeration container operates by recirculating and aerating sewage or effluent from the processing tank and in the de-nitrification step said container stops its operation. The supply of polluted water to be treated and the discharge of treated water always occur from the processing tank.

In this alternative, the tank has a small size calculated as a function of process requirements and the closed aeration container is sized so as to grant a sufficient contact time between air and sewage or effluent. A continuous recirculation of sewage or effluent from the bottom of the processing tank takes place between the tank itself and the container. The recirculation can be carried out by the previously mentioned pump or by a dedicated pump. The flow of aerated sewage or effluent is then distributed by means of a generally mechanical stirrer to the whole volume of the processing tank. The plurality of oxygenizers is located in the closed aeration container, which can be placed inside or outside the processing tank. The oxygenizers are installed in the closed aeration container, uniformly distributed on opposite vertical walls thereof.

The closed aeration container is made according to two possible solutions.

In a first solution, the oxygenation pump takes the sewage or effluent from the processing tank through a mechanical filter, and supplies it under high pressure into the oxygenation network and from the latter into the aeration container by means of a suitable number of oxygenizers. The sewage or effluent thus aerated is supplied back into the bottom of the processing tank, either by gravity or with a pump, in which tank stirring occurs by means of a mechanical stirrer.

In a second solution, the oxygenation pump takes the sewage or effluent from the aeration container through a mechanical filter, and supplies it under high pressure back into the oxygenation network in the same oxygenation container by means of a suitable number of oxygenizers. Another pump supplies continuously the aeration container with new sewage or effluent to be aerated from the processing tank. The effluent thus aerated is supplied back into the bottom of the processing tank, either by gravity or with a pump, in which tank stirring occurs by means of a generally mechanical stirrer.

Moreover, in all the solutions above described and according to processing requirements, the "Venturi effect" in oxygenizers can be increased thanks to a forced aeration system which pressurizes the air intake pipes in oxygenizers increasing the flow rate of air sucked up by "Venturi effect".

As a new feature, thanks to the plant associated with the forced aeration system the high pressure in the pipe network (> 2 bars) creates within each oxygenizer such a high specific air-liquid exchange surface to enable the transfer into the liquid of the greater air flow rate supplied by the forced aeration system.

It can thus be inferred that the process can occur in one completely stirred tank CSTR (Completely Stirred Tank Reactors) with continuous supply and discharge from the tank, or in a tank and in a closed aeration container associated to said tank.

The plant with one processing tank or the one with processing tank associated to the closed aeration container are sized so as to treat the amount of sewage of effluent that is daily supplied; in other words, the bacterial biomass present in the tank consumes the whole polluting charge.

The plant with only one processing tank contains sewage of effluent that has already been treated as well as the bacterial biomass required for metabolic decomposition. The aforesaid bacterial biomass develops thanks to the alternation of high pressure and absence of pressure and may if necessary be discharged directly together with the treated effluent (plant without control of biomass amount) or kept in the processing tank with sedimentation or filtration systems (plant with control of biomass amount). In the latter case, the fraction of biomass accumulating in excess should be extracted from time to time (i.e. that part of the biomass exceeding the predefined value for metabolic decomposition of the daily load of a specific plant).

Moreover, the plant can include means for controlling the biomass amount by means of an inner clarifier or filtration membranes.

The upper pipe network along which the oxygenizers are connected is preferably located in the upper region of the tank so as to optimize the effectiveness of "Venturi effect", whereas a lower pipe network placed on the bottom of the tank sucks up in various points the sewage or effluent by means of the pump to which the upper pipe network is connected, so as to promote the downward flow or sewage or effluent mixed with air.

As an alternative, sewage or effluent is taken from the bottom of the tank by means of one or more independent ducts whose intake openings reach various points near the bottom of the tank.

The size of the upper pipe network, or oxygenation network, and the number of oxygenizers installed along said upper pipe network in the tank only or in the aeration container depend on the volume and on the chemical-physical characteristics of the effluent to be treated daily.

### Advantages of the invention

The main advantages of the invention are listed below.
- There is a lower energy consumption thanks to the lower water head with respect to a plant using "Odobez" technology, the amount of air supplied to water being the same.
- Thanks to the plant associated to the forced aeration system, the high pressure in the upper pipe network (> 2 bars) creates inside the oxygenizer such a high specific air-water exchange surface as to enable the transfer into water of the higher flow rate of air supplied by the forced aeration system.
- The high pressure in the upper pipe network causes in the oxygenizers the effluent or sewage to be pulverized and mixed with air, so as to support a highly effective and easily managed biological process.
- The level at which the exit orifices of the oxygenizers lie, which level is always high with respect to the height of the tank and optionally near the surface of the liquid in the tank, as well as the high pressure in the upper network ensure an extremely high effectiveness of the nitrification step.
- The invention allows implementing more than one type of treatment of polluted effluents.
- Treatment of sewage for spreading (or pre-treatment in the case of effluents): the sewage is treated until reaching a reduction of nitrogen by 75-80% so as to be spread onto agricultural soils in compliance with regulations (Directive 91/676/ECC - Nitrate Directive). Oxygen supplied to these plants is exactly the same amount consumed for reducing nitrogen and a part of organic substance. Thus the whole organic charge is not consumed and the discharge obtained from the plant still has a certain fertilizing power.
- The plant is highly flexible and the process is very stable and effective, thus it is suitable for a large number of highly polluting effluents/sewages.
- The process is always self-adjusting at a temperature of 30-38°C and pH of 7-7.8 thanks to the oxygenation system. Processing values indicated above are optimal for biological purification systems in mesophily.
- Redox potential and oxygen concentration depend on the type of treatment, more or less forced, which is to be carried out, according to users' requirements.
- Eventually, the forced aeration means associated to the plant enable a reduction of processing costs in all types of plants and treatments, with the same sewage or effluent to be treated. As a matter of fact, with the same number of oxygenizers as other plants, the amount of air that can be blown can sometimes be twice as much the one supplied by conventional oxygenizers.

There are three main advantages resulting from the use of a closed aeration container separated from the tank volume:
- Long stainless steel pipe networks are not necessary inside the processing tank, which means lower costs for the plant.
- Since said container is separated from the processing tank, all maintenance operations are much simpler and faster. Moreover, it is no longer necessary to empty the processing tank for maintenance in the upper network and in the oxygenizers immersed in the tank
- The system is much more flexible for oxygenation management, since there is no longer a strict connection between oxygenation effectiveness (which depends on the level of liquid above the oxygenation network) and retention time (which depends on the volume, and thus on the level, of liquid contained in the tank). In other words, in order to keep the level in the tank low (and thus a good Venturi effect) it is necessary with the same HRT to build tanks with very large surfaces. Conversely, if an outer aeration container is used, the effectiveness of "Venturi effect" will depend on the pressure set inside the container. It is thus possible to build tanks with surfaces smaller than the conventional ones.

### Description of preferred embodiments

The invention will now be explained in further detail by means of examples of embodiment thanks to diagrams and schematic drawings, in which
- Fig. 1a is a diagram showing the steps and parts of a purification plant that can be regarded as prior art with respect to the one disclosed in European Patent 0 907 615 to "Odobez",
- Fig. 1b is a diagram showing the steps and parts of the container disclosed in the aforesaid European Patent to "Odobez", which can be regarded as the closest to the invention,
- Fig. 1c is a diagram showing the steps and parts of the invention,
- Fig. 2 is a first side view,
- Fig. 3 is a first plan view,
- Fig. 4 is a second side view,
- Fig. 5 is a second plan view,
- Fig. 6 is a third side view,
- Fig. 7 is a third plan view,
- Figs. 8 and 9 are fourth side views,
- Fig. 10 is a fourth plan view,
- Fig. 11 is a sixth side view and
- Fig. 12 is an eleventh plant view.

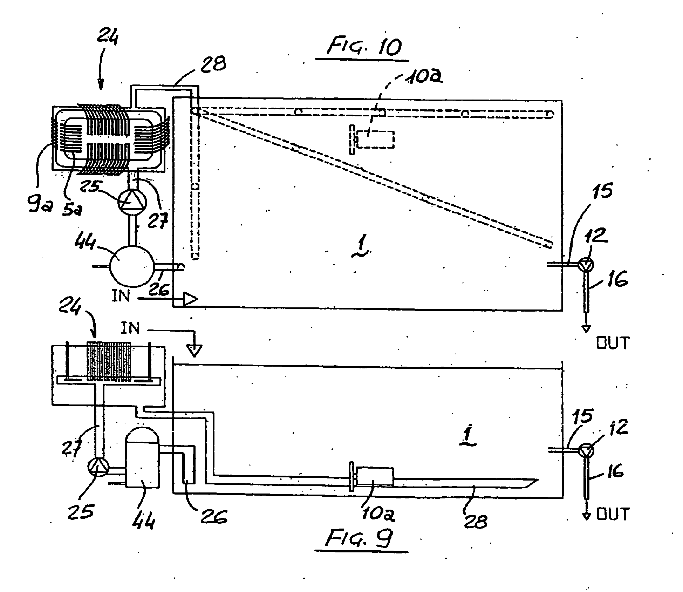

Fig. 9-12 do not represent the invention.

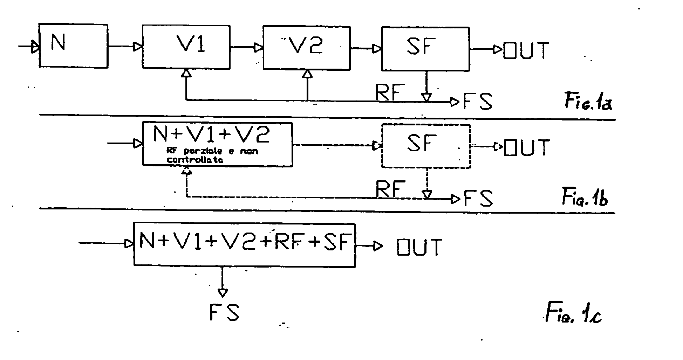

With reference to the diagrams in Figs. 1a, 1b and 1c the following abbreviations are used:
- N is the neutralization step,
- V1 is the first treatment step (DE-NITRO),
- V2 is the second treatment step (NITRO),
- SF is sludge separation,
- RF is sludge recirculation,
- FS is sludge discharge.

The figures show that for implementing steps N, V1, V2, SF generally four tanks are required in plants prior to Odobez, two tanks in Odobez plant, and that in the plant according to the invention only one tank is required for steps N, V1, V2, RF and SF, whereas sludge discharge takes place directly from the only tank. The aeration container, if present, is regarded as part of the processing tank.

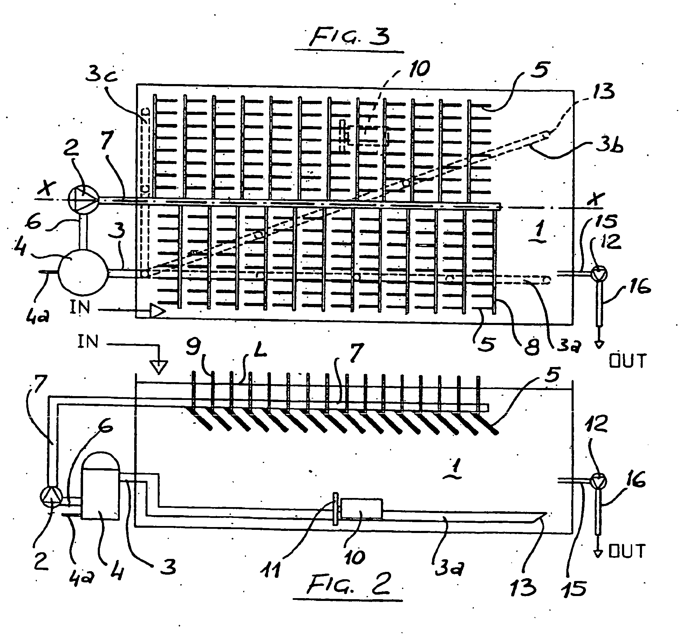

- Figs. 2 and 3 show a plant without biomass control. Sewage or effluent from outside is poured into the tank 1 in IN. The figure shows that (in the first process step) a pump 2 sucks up sewage or effluent from the bottom of the tank through the ducts 3, 6 and the mechanical self-cleaning filter 4, whose purpose is to keep the pump 2 and the oxygenizers 5 clean retaining coarse material that may be present in the effluent or sewage, discharged through the pipe 4a. Treated sewage or effluent is daily sucked up by the pump 12 through the duct 15 and discharged through the duct 16 (OUT). The same pump 2 presses the sewage or effluent in the upper pipe network 7 comprising a plurality of cross ducts 8 deriving from the upper pipe 7. The pressure of the pump 2 is controlled within a predefined range by means of a control panel receiving signals of process parameters through probes. The upper pipe 7 gets into the upper region of the tank and through it along the longitudinal middle axis. L refers to the surface of the liquid in the tank. The plurality of cross ducts 8 starts from the upper pipe 7, which ducts 8 send the sewage or effluent to a plurality of oxygenizers 5, each equipped with a pipe 9 extending and opening into the atmosphere. The oxygenizers 5 pour into the tank 1 sewage or effluent mixed with air sucked up by "Venturi effect" through the pipes 9. The oxygenizers 5 are inclined so that their stream can reach the bottom of the tank. A mechanical stirrer 10 is installed near the bottom of the tank so as to be activated with its propeller 11 (in the second process step). A lower pipe network sucking up sewage or effluent from the bottom of the tank starts from the intake duct 3 where it enters the tank and includes the branches 3a, 3b, 3c, each equipped with intake openings 13 forming a plurality of intake openings distributed on the bottom of the tank. The cross ducts 8 and the plurality of oxygenizers 5 are divided into two groups with respect to the longitudinal middle axis X-X. A group of oxygenizers faces a longitudinal direction and the other group faces the opposite longitudinal direction, this in order to increase fluid stirring inside the tank in the first process step. In the example shown, the tank is rectangular in plan, with a surface of 340 m² and an effective height of 3.5 m. The pump 2 can pump into the upper pipe network 350 m³/h of sewage or effluent, at an average pressure of 7 bars (the range being 6-9 bars) in case of refractory effluent, and at an average pressure of 4 bars (the range being 3.5-5.5 bars) in case of zootechnical sewage (though with a larger number of oxygenizers), so that the whole of the oxygenizers 5 supplies a flow rate of effluent or sewage and air of 850 m³/h; the plant thus sized is able to treat a refractory polluted water with 1,500 kg COD/day and 150 kg TKN/day reducing nitrogen load (TKN) of 85% and organic load (COD) of 80% (COD = Chemical Oxygen Demand; TKN = Total Kjeldahl Nitrogen). The discharge openings of the 480 oxygenizers will be located at 1.25 m from the bottom of the tank and the oxygenizers will be oriented towards the bottom at 31° (considering the horizon = 0°), for effluent the discharge openings of the 330 oxygenizers will be located at 1.65 m from the bottom and the oxygenizers will be oriented towards the bottom at 42° (considering the horizon = 0°). It can be inferred that the processing tank can be of any shape in plan, depending on the characteristics of the site in which it is installed, e.g. beyond being rectangular, it can be square, circular, polygonal in plan.

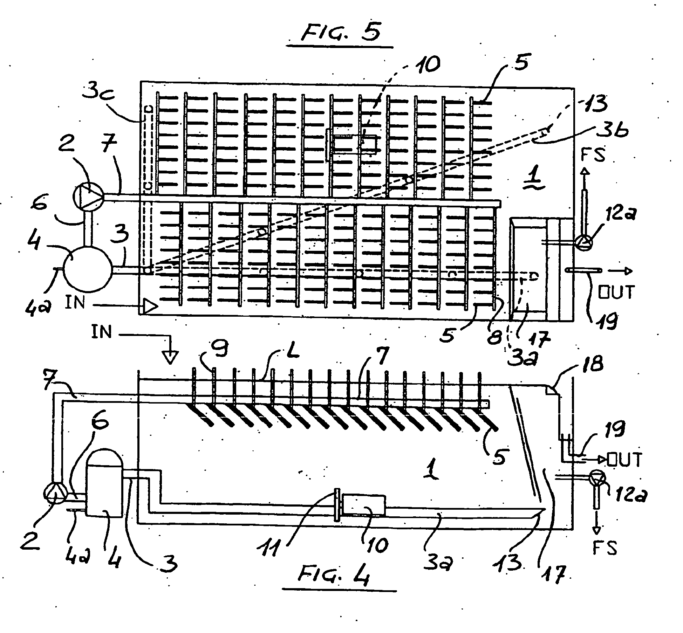

- Figs. 4 and 5 show a plant as in Figs. 2 and 3, though equipped with an inner clarifier 17 in which the sludge produced during the process is collected and directly recirculated in the tank 1 or sent to the excess sludge by means of the pump 12a (FS). Treated water is discharged through the drain 18 and the pipe 19 (OUT).

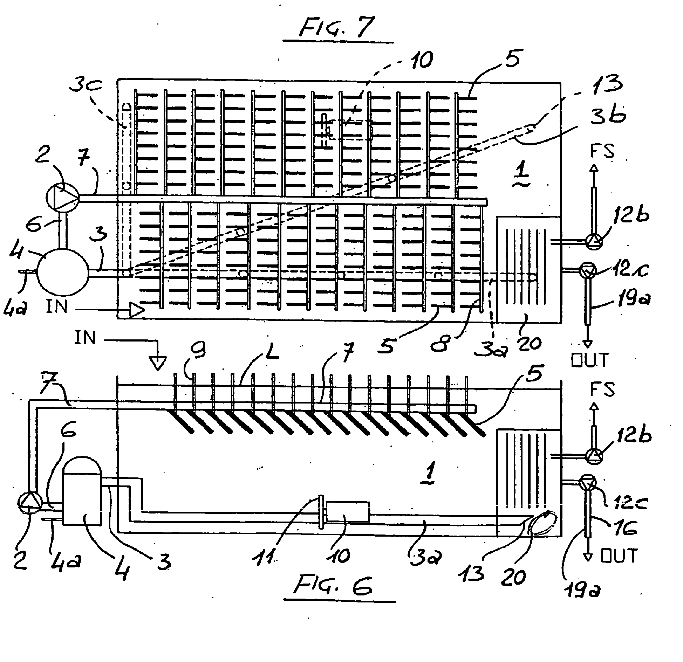

- Figs. 6 and 7 show a plant as in Figs. 2 and 3, though equipped with a series 20 of micro-or ultrafiltration membranes inside the processing tank, in which the sludge produced during the process is filtered and directly recirculated in the tank 1 or sent to the excess sludge by means of the pump 12b (FS). Treated water is extracted through the pump 12c and the pipe 19a (OUT).

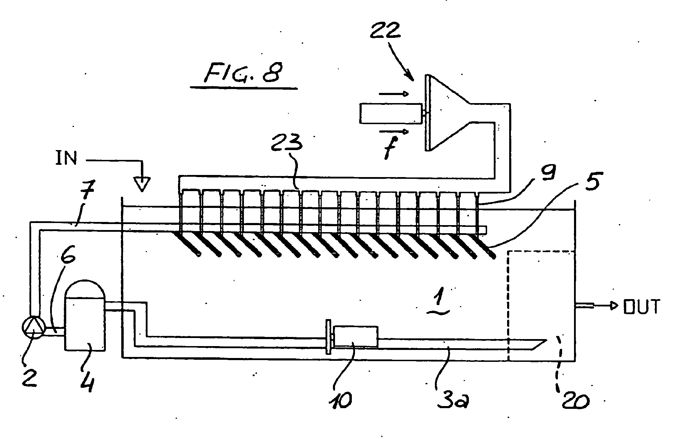

Fig. 8 shows a plant as in Figs. 6 and 7, though equipped with a system comprising an atmospheric air blowing mean 22 (arrows f) and an air duct network, globally referred to with numeral 23, branched and connected to each of the pipes 9 of the oxygenizers 5 so that the latter receive an air surplus and strongly oxygenate the sewage or effluent in the processing tank 1. OUT refers to the extraction of treated water through a pump (not shown).

Figs. 9 and 10 show a first plant with a closed aeration container 24 outside the processing tank 1. An oxygenation pump 25 takes sewage or effluent from the processing tank through a mechanical filter 44 and the pipes 26 and supplies it at high pressure in the pipe 27 into the same aeration container equipped with a suitable number of oxygenizers 5a. The sewage or effluent thus aerated is supplied back into the bottom of the processing tank by gravity along the pipes 28 (optionally by means of a pump not shown), in which processing tank stirring occurs by way of a mechanical stirrer 10a. The extraction (OUT) of treated water is still carried out by means 12, 15, 16 already mentioned with reference to Figs. 2 and 3.

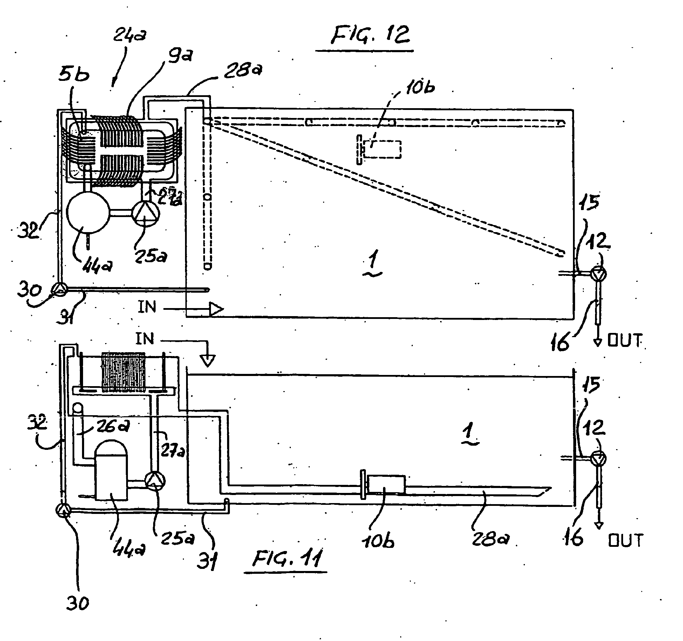

Figs. 11 and 12 show a second plant with a closed aeration container 24a outside the processing tank 1. An oxygenation pump 25a takes sewage or effluent from the aeration container through a mechanical filter 44a and the pipes 26a and supplies it at high pressure in the pipe 27a into the same aeration container equipped with a suitable number of oxygenizer 5b, each associated to an intake pipe 9a. The pump 30 supplies continuously the aeration container with new sewage or effluent to be aerated through the pipe 32 from the processing tank by way of the pipe 21, whereas the effluent or sewage thus aerated is supplied back into the bottom of the processing tank by gravity along the pipe 28a (optionally by means of a pump not shown), in which processing tank stirring occurs by way of a mechanical stirrer 10b. The extraction (OUT) of treated water is still carried out by means 12, 15, 16 already mentioned with reference to Figs. 2 and 3.

## Claims

1. A process for purifying polluted waters in a processing tank (1) with continuous supply and discharge, in which two steps alternate, a first nitrification step and a second de-nitrification step, in the first step sewage or effluent and air being blown with oxigenizers (5) installed along an upper pipe network (8) and equipped with means for sucking up atmospheric air thanks to an effect only conventionally here referred to as "Venturi effect", alternating times and step duration being selected as a function of nitrogen load being input, and wherein in the first step the pressure in the upper pipe network (8) is kept above 2 bars and a filtered mixture of air and sewage or effluent taken from the tank bottom is blown by means of the oxygenizers (5) into the tank (1) at a distance D from the bottom of the tank varying from about half the tank height to about the liquid surface in the tank, and in the second step the sewage or effluent treated in the first step is stirred without blowing air by means of at least one stirrer (10) that is able to break the biological foam previously formed.

2. The process according to claim 1, **characterized in that** the aeration required in the first process step is obtained in a closed aeration container (24, 24a) independent from the processing tank (1), and **in that** a continuous recirculation of sewage or effluent is obtained between the processing tank (1) and the closed aeration container (24, 24a), which recirculation distributes the flow of aerated sewage or effluent in the whole volume of the processing tank (1).

3. The process according to claims 1-2, **characterized in that** dissolved oxygen (DO) and redox potential (RedOX) conditions are kept in the first step of the sewage treatment in which DO < 0.1 mg/l and RedOX = -200mV ÷ 0 mV thanks to the high concentration of dissolved oxygen and to the positive redox inside each oxygenizers (5, 5a-b) and working at pressure higher than 2 bars and conditions in which DO = 0 mg/l and RedOX = -400 ÷ 300 mV are kept in the second step, thus causing a reduction of 85% of nitrogen and of 80% of organic substance.

4. The process according to claims 1-3 **characterized in that** the average pressure in the upper pipe network (8) and in oxigenizers (5, 5a) is of about 4 bars in processes for the treatment of sewage.

5. The process according to claims 1-4 **characterized in that** the average pressure in the upper pipe network (8) and in oxigenizers (5, 5a) is of at least 7 bars in processes for the treatment of effluents.

6. A plant for purifying polluted water according to the process claimed in claims 1, 3 - 5, **characterized in that** it comprises a processing tank (1) receiving from outside the polluted sewage or effluent, at least one pump (2) sucking up sewage or effluent from the bottom of the tank and sending it into an upper pipe network (8) bearing a plurality of oxygenizers (5) immersed in the sewage or effluent, a filter (4) being placed between the pump (2) and a pipe (3) sucking up the sewage or effluent from the bottom of the tank (1) wherein there are comprised the pump (2) suitable for producing in the upper pipe network (8) a pressure of at least 2 bars, the filter (4) and discharge openings in the oxygenizers (5) immersed at a distance D from the bottom of the tank varying from equal or above half the tank height.

7. The plant according to claim 6 **characterized in that** it comprises:
a) a closed aeration container (24), associated to and outside or inside the processing tank (1), in which a plurality of oxygenizers (5a) are located wherein sewage or effluent is aerated during the first process step,
b) a pump (25) suitable for taking the sewage or effluent from the processing tank (1) and supplying it at a pressure of at least 2 bars into an oxygenation network and transferring it by means of oxygenizers (5a) into the closed aeration container (24) from which the sewage or effluent thus aerated is supplied back into the bottom of the processing tank (1) where a stirrer (10) carries out the stirring of the second process step.

8. The plant according to claim 7 **characterized in that** it comprises:
a) a closed aeration container (24a), associated to and outside or inside the processing tank (1), in which a plurality of oxygenizers (5b) are located wherein sewage or effluent is aerated during the first process step,
b) the pump (25a) suitable for taking the sewage or effluent from the aeration container (24a) and supplying it back under a pressure of at least 2 bars into an oxygenation network and transferring it by means of oxygenizers (5b) into said container (24a) and a second pump (12) taking from the bottom of the processing tank (1) the sewage or effluent to be aerated and sending it to the closed aeration container (24a), the effluent or sewage thus treated being supplied back into the bottom of the processing tank (1) where a stirrer (10) carries out the stirring of the second process step.

9. The plant according to claims 6-8 **characterized in that** it comprises forced blowing means (22) that are suitable for sending pressurized air into the oxigenizers (5) thus increasing the the flow rate of the air sucked up by "Venturi effect".

## Patentansprüche

1. Verfahren zum Aufbereiten von verunreinigten Wässern in einem Prozesstank (1) mit fortlaufendem Zulauf und Ablauf, in dem sich zwei Schritte abwechseln, ein erster Nitrifikationsschritt und ein zweiter Denitrifikationsschritt, im ersten Schritt werden Schmutzwasser oder Abwasser und Luft mit Sauerstoffanreicherern (5) geblasen, die entlang eines oberen Leitungsnetzes (8) angebracht sind und mit Mitteln zum Ansaugen von atmosphärischer Luft dank eines Effekts, der hier nur gewöhnlich als "Venturi-Effekt" bezeichnet wird, ausgestattet sind, wobei Wechselzeiten und Schrittdauer als eine Funktion von Stickstoffbelastung des Eintrags gewählt werden, und wobei im ersten Schritt der Druck im oberen Leitungsnetz (8) über 2 bar gehalten wird und ein filtriertes Gemisch aus Luft und Schmutzwasser oder Abwasser, das vom Tankboden genommen wird, mittels der Sauerstoffanreicherer (5) in den Tank (1) geblasen wird bei einem Abstand D vom Boden des Tanks, der von ungefähr der halben Tankhöhe bis ungefähr zur Flüssigkeitsoberfläche im Tank variiert, und im zweiten Schritt das Schmutzwasser oder Abwasser, das im ersten Schritt behandelt wurde, ohne Luft einzublasen umgerührt wird mittels zumindest eines Rührers (10), der fähig ist den vorgehend gebildeten biologischen Schaum zu brechen.

2. Verfahren gemäß Anspruch 1, **dadurch gekennzeichnet, dass** die im ersten Schritte nötige Luftzufuhr in einem geschlossen Luftzufuhrbehälter (24, 24a) erreicht wird, unabhängig vom Prozesstank (1), und dadurch, dass ein fortlaufender Umlauf von Schmutzwasser oder Abwasser zwischen dem Prozesstank (1) und dem geschlossen Luftzufuhrbehälter (24, 24a) erreicht wird, wobei der Umlauf den Fluss von mit Luft angereichertem Schmutzwasser oder Abwasser über das gesamte Volumen des Prozesstanks (1) verteilt.

3. Verfahren gemäß Ansprüchen 1-2, **dadurch gekennzeichnet, dass** im ersten Schritt der Abwasserbehandlung gelöster Sauerstoff- (DO) und Redox-Potential-(RedOX) Bedingungen gehalten werden, bei denen DO < 0,1 mg/l und RedOX = - 200mV ÷ 0 mV sind, dank der hohen Konzentration von gelöstem Sauerstoff und dem positiven Redox in allen Sauerstoffanreicherern (5, 5a-b) und Arbeiten bei Druck höher als 2 bar und im zweiten Schritt Bedingungen gehalten werden, bei denen DO = 0 mg/l und RedOX = -400 mV ÷ 300 mV ist, um somit eine Reduktion von 85% des Stickstoffs und von 80% von organischer Substanz zu bewirken.

4. Verfahren gemäß Ansprüchen 1-3, **dadurch gekennzeichnet, dass** der mittlere Druck im oberen Leitungsnetz (8) und in Sauerstoffanreicherern (5, 5a) ungefähr 4 bar ist im Verfahren zur Behandlung von Abwässern.

5. Verfahren gemäß Ansprüchen 1-4, **dadurch gekennzeichnet, dass** der mittlere Druck im oberen Leitungsnetz (8) und in Sauerstoffanreicherern (5, 5a) zumindest 7 bar ist im Verfahren zur Behandlung von Abwässern.

6. Anlage zum Aufbereiten von verunreinigtem Wasser gemäß dem in Ansprüchen 1, 3-5 beanspruchten Verfahren, **dadurch gekennzeichnet, dass** sie einen Prozesstank (1), der verunreinigtes Schmutzwasser oder Abwasser von Außerhalb aufnimmt, zumindest eine Pumpe (2), die Schmutzwasser oder Abwasser vom Boden des Tanks ansaugt und es in ein oberes Leitungsnetz (8) befördert, das eine Anzahl an Sauerstoffanreicherern (5), die in das Schmutzwasser oder Abwasser getaucht sind, trägt, einen Filter (4) umfasst, der zwischen der Pumpe (2) und einer Leitung (3) angeordnet ist, die das Schmutzwasser oder Abwasser vom Boden des Tanks (1) ansaugen, wobei die Pumpe (2), die geeignet ist, um im oberen Leitungsnetz (8) einen Druck von zumindest 2 bar zu erzeugen, das Filter (4) und Auslassöffnungen in den Sauerstoffanreicherern (5), die in einem Abstand D vom Boden des Tanks untergetaucht sind, der von gleich oder über der halben Tankhöhe variiert, vorgesehen sind.

7. Die Anlage gemäß Anspruch 6, **dadurch gekennzeichnet, dass** sie umfasst:
a) einen geschlossenen Luftzufuhrbehälter (24), der verbunden mit und außerhalb oder innerhalb des Prozesstanks (1) angeordnet ist, in dem eine Anzahl an Sauerstoffanreicherern (5a) angeordnet sind, wobei Schmutzwasser oder Abwasser mit Luft angereichert wird während des ersten Verfahrensschritts,
b) eine Pumpe (25), die geeignet ist das Schmutzwasser oder Abwasser aus dem Prozesstank (1) zu entnehmen und bei einem Druck von zumindest 2 bar in ein Sauerstoffanreicherungsnetzwerk einzuleiten und es mittels von Sauerstoffanreicherern (5a) in den geschlossenen Luftzufuhrbehälter (24) zu transportieren, von dem das so mit Luft angereicherte Schmutzwasser oder Abwasser zurück an den Boden des Prozesstanks (1) geleitet wird, wo ein Rührer (10) das Rühren des zweiten Verfahrensschritts ausführt.

8. Anlage gemäß Anspruch 7, **dadurch gekennzeichnet, dass** sie umfasst:
a) einen geschlossenen Luftzuführbehälter (24a), der verbunden mit und außerhalb oder innerhalb des Prozesstanks (1) angeordnet ist, in dem eine Anzahl an Sauerstoffanreicherern (5b) angebracht sind, wobei Schmutzwasser oder Abwasser mit Luft angereichert wird während des ersten Verfahrensschritts,
b) die Pumpe (25), die geeignet ist das Schmutzwasser oder Abwasser aus dem Luftzufuhrbehälter (24a) zu entnehmen und es unter einem Druck von zumindest 2 bar in ein Sauerstoffanreicherungsnetzwerk zurückzuleiten und es mittels Sauerstoffanreicherern (5b) in den Behälter (24a) zu transportieren und eine zweite Pumpe (12), die vom Boden des Prozesstanks (1) das Schmutzwasser oder Abwasser, das mit Luft angereichert werden soll, nimmt und es zu dem geschlossenen Luftzufuhrbehälter (24a) leitet, wobei das so behandelte Schmutzwasser oder Abwasser an den Boden des Prozesstanks (1) zurückgeleitet wird, wo ein Rührer (10) das Rühren des zweiten Verfahrensschritts ausführt.

9. Anlage gemäß Ansprüchen 6-8, **dadurch gekennzeichnet, dass** sie Mittel zum erzwungenen Blasen (22) umfasst, die geeignet sind, um unter Druck gesetzte Luft in die Sauerstoffanreicherer (5) zu leiten, um so die Flussrate der Luft, die durch "Venturi-Effekt" angesaugt wird, zu steigern.

## Revendications

1. Procédé permettant l'épuration des eaux polluées dans un réservoir de traitement (1) avec alimentation et évacuation continues, selon lequel deux étapes sont effectuées en alternance, à savoir une première étape de nitrification et une seconde étape de dénitrification, dans la première étape, des eaux résiduaires ou des effluents étant soumis à un soufflage d'air avec des éléments d'oxygénation (5) montés le long d'un réseau de tubes supérieur (8) et équipés de moyens permettant d'aspirer l'air atmosphérique par un effet conventionnellement dénommé « effet Venturi » les temps d'alternance et la durée de chaque étape étant choisis en fonction de la charge d'azote introduite, et, dans la première étape, la pression dans le réseau de tubes supérieur (8) étant maintenue au dessus de 2 bars, et un mélange filtré d'air et d'eaux résiduaires ou d'effluents soutirés du fond du réseau étant, soufflé au moyen des éléments d'oxygénation (5), dans le réservoir (1) à une distance D du fond du réservoir variant d'environ la moitié de la hauteur du réservoir à environ la surface de liquide dans le réservoir, et, dans la seconde étape les eaux résiduaires ou les effluents traités dans la première étape étant agités sans soufflage d'air au moyen d'au moins un agitateur (10) susceptible de casser la mousse biologique formée auparavant.

2. Procédé conforme à la revendication 1,
**caractérisé en ce que**
l'aération nécessaire dans la première étape du procédé est obtenue dans un conteneur d'aération fermé (24, 24a) indépendant du réservoir de traitement (1), et une récirculation en continu d'eaux résiduaires ou d'effluents étant obtenue entre le réservoir de traitement (1) et le conteneur d'aération fermé (24, 24a) cette recirculation distribuant le flux d'eaux résiduaires ou d'effluents aérés dans la totalité du volume du réservoir de traitement (1).

3. Procédé conforme aux revendications 1 et 2,
**caractérisé en ce que**
les conditions d'oxygène dissous (DO) et de potentiel redox (RedOX) sont maintenues dans la première étape de traitement des eaux résiduaires dans des conditions dans lesquelles DO < 0,1 mg/l et RedOX = -200mV ÷ 0 mV grâce à la forte concentration en oxygène dissous, au potentiel RedOX positif dans chaque élément d'oxygénation (5, 5a-b) et au travail à une pression supérieure à 2 bars, et des conditions dans lesquelles DO = 0 mg/l et RedOX = -400mV ÷ 300 mV sont maintenues dans la seconde étape, entraînant ainsi une réduction de 85 % de l'azote et de 80 % des substances organiques.

4. Procédé conforme aux revendications 1 à 3,
**caractérisé en ce que**
la pression moyenne dans le réseau de tubes supérieur (8) et dans les éléments d'oxygénation (5, 5a) est d'environ 4 bars dans des procédés de traitement d'eaux résiduaires.

5. Procédé conforme aux revendications 1 à 4,
**caractérisé en ce que**
la pression moyenne dans le réseau de tubes supérieur (8) et dans les éléments d'oxygénation (5, 5a) est d'au moins 7 bars dans des procédés de traitement d'effluents.

6. Installation permettant l'épuration d'eaux polluées par la mise en oeuvre du procédé conforme aux revendications 1 et 3 à 5,
**caractérisée en ce qu'**
elle comprend un réservoir de traitement (1) recevant, de l'extérieur, des eaux résiduaires ou des effluents pollués, au moins une pompe (2) aspirant les eaux résiduaires ou les effluents à partir du fond du réservoir et les transférant dans un réseau de tubes supérieur (8) portant une série d'éléments d'oxygénation (5) immergés dans les eaux résiduaires ou les effluents, et un filtre (4) monté entre la pompe (2) et un tube (3) aspirant les eaux résiduaires ou les effluents à partir du fond du réservoir (1), la pompe (2) étant adaptée pour produire dans le réseau de tubes supérieur (8) une pression d'au moins 2 bars, le filtre (4) et des ouvertures d'évacuation dans les éléments d'oxygénation (5) étant immergés à une distance D du fond du réservoir égale ou supérieure à la moitié de la hauteur du réservoir.

7. Installation conforme à la revendication 6,
**caractérisée en ce qu'**
elle comporte :
a) un conteneur d'aération fermé (24), associé au réservoir de traitement (1) et situé à l'intérieur ou l'extérieur de ce réservoir, dans lequel sont montés une série d'éléments d'oxygénation (5a), les eaux résiduaires ou les effluents étant aérés au cours de la première étape du procédé,
b) une pompe (25) susceptible de prélever les eaux résiduaires ou les effluents du réservoir de traitement (1) et de les transférer à une pression d'au moins 2 bars dans un réseau d'oxygénation, et de les transférer au moyen des éléments d'oxygénation (5a) dans le conteneur d'aération fermé (24) à partir duquel les eaux résiduaires ou les effluents ainsi aérés sont ramenés au fond du réservoir de traitement (1) où un agitateur (10) met en oeuvre l'agitation de la seconde étape du procédé.

8. Installation conforme à la revendication 7,
**caractérisée en ce qu'**
elle comporte :
a) un conteneur d'aération fermé (24a), associé au réservoir de traitement (1) et situé à l'intérieur ou l'extérieur de ce réservoir, dans lequel sont montés une série d'éléments d'oxygénation (5b), les eaux résiduaires ou les effluents étant aérés au cours de la première étape du procédé,
b) une pompe (25a) susceptible de prélever les eaux résiduaires ou les effluents du conteneur d'aération (24a) de les ramener sous une pression d'au moins 2 bars dans un réseau d'oxygénation, et de les transférer au moyen des éléments d'oxygénation (5b) dans le conteneur (24a) et une seconde pompe (12) prélevant les eaux résiduaires ou les effluents devant être aérés du fond du réservoir de traitement (1) et les transférant dans le conteneur d'aération fermé (24a), les effluents ou les eaux résiduaires ainsi traités étant ramenés au fond du réservoir de traitement (1) où un agitateur (10) met en oeuvre l'agitation de la seconde étape du procédé.

9. Installation conforme aux revendications 6 à 8,
**caractérisée en ce qu'**
elle comporte des moyens de soufflage forcé (22) qui sont susceptibles d'envoyer de l'air sous pression dans les éléments d'oxygénation (5) augmentant ainsi que débit de l'air aspiré par effet Venturi.
